# EUROPEAN PATENT APPLICATION

(11) **EP 4 837 820 A1**
(43) Date of publication of application: **11.11.2026**
(21) Application number: 25175421.4
(22) Date of filing: 09.05.2025
(51) Int. Cl.: B62D 21/15, B62D 25/16, B60J 5/06

(54) **VEHICLE COMPRISING A FRONT VEHICLE FENDER AND METHOD FOR CONTROLLING DISPLACEMENT OF A FRONT VEHICLE FENDER**

(71) Applicant: Zhejiang Zeekr Intelligent Technology Co., Ltd, Ningbo City Zhejiang (CN); Zhejiang Geely Holding Group Co., Ltd., Hangzhou, Zhejiang 310051 (CN)
(72) Inventor: GUSTAVSSON, Martin, 423 53 TORSLANDA (SE); ERIXON, Martin, 446 32 ÄLVÄNGEN (SE); ERICSSON, Mattias, 417 46 GÖTEBORG (SE)
(74) Representative: Zacco Sweden AB

(57) **Abstract**

A vehicle comprising a front vehicle fender and a sliding vehicle side door. The front vehicle fender comprises an inner side surface, an outer side surface, and a rear side edge structure. The rear side edge structure is arranged in a rearwards vehicle direction in direct connection to a front edge section of the vehicle side door in a closed door position. The rear side edge structure comprises a deflection surface having a rearwards and inwards inclined configuration. In the closed door position, the deflection surface is configured for engaging the front edge section of the vehicle side door in a vehicle front impact event such that the front vehicle fender is displaced and guided inwards of the vehicle side door, preventing the front vehicle fender from blocking opening of the vehicle side door after the vehicle front impact event.

## Description

### TECHNICAL FIELD

The present disclosure relates to a vehicle comprising a front vehicle fender. The front vehicle fender comprises an inner side surface, an outer side surface, and a rear side edge structure. The rear side edge structure is configured for being arranged in a rearwards vehicle direction when attached to a vehicle, in direct connection to a front edge section of a sliding vehicle side door in a closed door position. The disclosure further relates to a method for controlling a displacement of a front vehicle fender relative to a sliding vehicle side door in a vehicle front impact event.

### BACKGROUND

Vehicle door systems are used for covering openings of a vehicle body structure, where the openings lead to an interior compartment of the vehicle. The door systems generally comprise a displacement mechanism configured for displacing a door structure in relation to the opening between a closed door position and open door positions. Traditionally, hinged door structures are used, where the door structures are connected to the vehicle body structure via hinges or similar arrangements, and displaced in relation to the vehicle body structure between open and closed positions by a swinging or pivoting movement.

Sliding vehicle side doors are becoming more popular and are instead mounted to or suspended in relation to the vehicle body structure for example via arms, a track system, or a combined track and hinge system. The sliding vehicle side doors are displaced in relation to the vehicle body structure between open and closed positions, where the whole vehicle side door moves relative to the vehicle body structure by a sliding and/or a swiping movement horizontally alongside the vehicle body structure. Sliding vehicle side doors and other alternative door systems have the advantage with smaller space needed for the opening and closing of the door compared to a hinged door solution.

Sliding vehicle side doors may be connected to the vehicle body structure with arms, where the arms are moved relative to the vehicle side doors and the vehicle body structure upon displacement between the closed and open door positions. When using sliding vehicle side doors of this type, there may be a problem with opening the vehicle side doors after a vehicle impact event, where deformed front vehicle fenders are blocking the opening path of the vehicle side doors.

Opening of vehicle side doors after a vehicle impact event may be crucial for occupants of the vehicle. In case of certain crash load cases, such as for example in certain full frontal vehicle impact events, the functionality and operability of the doors must be guaranteed so that the occupants can leave the impacted vehicle. For conventional vehicles where the vehicle side doors are attached to the vehicle body structure with hinges, the vehicle is designed for low deformations behind the A-pillar for these crash load cases to enable the functionality and operability of the doors via the hinges. In vehicle solutions, where sliding vehicle side doors instead are used, the blocking of the opening functionality of the vehicle side doors must be prevented to enable opening of the vehicle side doors.

There is thus a need for an improved vehicle solution, where vehicle side doors can be opened after a vehicle impact event for a safe vehicle construction.

### SUMMARY

An object of the present disclosure is to provide a vehicle comprising a front vehicle fender, and a method for controlling a displacement of a front vehicle fender relative to a sliding vehicle side door in a vehicle front impact event, where the previously mentioned problems are avoided. This object is at least partly achieved by the features of the independent claims. The dependent claims contain further developments of the vehicle comprising a front vehicle fender, and the method for controlling a displacement of a front vehicle fender.

The disclosure concerns a vehicle comprising a front vehicle fender and a sliding vehicle side door. The front vehicle fender comprises an inner side surface, an outer side surface, and a rear side edge structure. The rear side edge structure is arranged in a rearwards vehicle direction in direct connection to a front edge section of the vehicle side door in a closed door position. The rear side edge structure comprises a deflection surface having a rearwards and inwards inclined configuration. In the closed door position, the deflection surface is configured for engaging the front edge section of the vehicle side door in a vehicle front impact event such that the front vehicle fender is displaced and guided inwards of the vehicle side door, preventing the front vehicle fender from blocking opening of the vehicle side door after the vehicle front impact event.

Advantages with these features are that by displacing and guiding the front vehicle fender inwards of the vehicle side door, the front vehicle fender is prevented from blocking opening of the vehicle side door after the vehicle front impact event. Opening of vehicle side doors after a vehicle impact event is crucial for occupants of the vehicle. In case of certain crash load cases, such as for example in certain full frontal vehicle impact events, the functionality and operability of the doors must be guaranteed so that the occupants can leave the impacted vehicle. The rearwards and inwards inclined configuration of the deflection surface is efficiently producing an inwards and rearwards sliding movement of the front vehicle fender relative to the vehicle side door in the vehicle front impact event. By displacing the front vehicle fender inwards of the vehicle side door, the front vehicle fender is not blocking the opening path of the vehicle side door. The deflection surface is in this way enabling a safe vehicle construction preventing the front vehicle fender from blocking opening of the vehicle side door after the vehicle front impact event, through the configuration where the deflection surface is engaging the front edge section of the vehicle side door such that the front vehicle fender is displaced and guided inwards of the vehicle side door. With sliding vehicle side door is in this context meant a vehicle side door that is opened and closed in a sliding and/or swiping movement. This is different from traditional hinged door structures where the door structures are connected to the vehicle body structure via hinges and displaced in relation to the vehicle body structure by a swinging or pivoting movement. The sliding vehicle side doors may instead be mounted to or suspended in relation to the vehicle body structure via arms, track systems, or suitable combinations of track and hinge systems. The sliding vehicle side doors are displaced in relation to the vehicle body structure by a sliding and/or a swiping movement horizontally alongside the vehicle body structure.

In one embodiment, the vehicle side door is configured for being displaced in a movement in an outwards vehicle direction and forwards vehicle direction upon opening from the closed door position to an open door position. This is enabling a simple and efficient opening and closing of the vehicle side door during operation. The movement of the vehicle side door in the outwards vehicle direction and forwards vehicle direction upon opening is positioning the vehicle side door in a direction outwards of the front vehicle fender, and the front vehicle fender is in this way being positioned at least partly behind and inwards of the vehicle side door in the open door positions. It is especially important for vehicles having vehicle side doors that are opened with a sliding and/or swiping movement in the outwards vehicle direction and forwards vehicle direction that the front vehicle fender is displaced and guided inwards of the vehicle side door in the vehicle impact event, since otherwise the vehicle side doors may be impossible to open after the vehicle impact event due to blocking by a deformed front vehicle fender. The displacing and guiding of the front vehicle fender inwards of the vehicle side door in the vehicle impact event is efficiently preventing the front vehicle fender from blocking opening of the vehicle side door after the vehicle front impact event, enabling opening of the vehicle side door in the movement in the outwards vehicle direction and forwards vehicle direction after the vehicle impact event.

In one embodiment, the deflection surface comprises a rear section extending in the rearwards vehicle direction such that in the closed door position the rear section of the deflection surface is extending rearwards of a front edge of the front edge section for an overlapping configuration of the deflection surface and the front edge section. The overlapping configuration between the deflection surface and the front edge section is enabling an efficient displacement of the front vehicle fender during the vehicle front impact event for an efficient guiding of the front vehicle fender inwards of the vehicle side door. In the vehicle front impact event, excessive forces are deforming the front vehicle fender and causing shockwaves in the structure of the front vehicle fender. If the front vehicle fender is not guided properly during the vehicle impact event, these shockwaves may deform the front vehicle fender in unwanted directions, such as on the outside of the vehicle side door. The overlapping relationship between the deflection surface and the front edge section is efficiently preventing that the deformation and the shockwaves are forcing the front vehicle fender on the outside of the vehicle side door during the vehicle front impact event.

In one embodiment, the front edge of the front edge section comprises a door outer panel hem flange. The deflection surface and the outer side surface are configured for being displaced inwards of the door outer panel hem flange in the vehicle front impact event. In the vehicle front impact event, the deflection surface is engaging the front edge section of the vehicle side door with the door outer panel hem flange, such that the front vehicle fender is displaced and guided inwards of the vehicle side door. The door outer panel hem flange is forming a forwards pointing structural part of the vehicle side door that is simplifying the interaction between the deflection surface of the front vehicle fender and the front edge section of the vehicle side door in the vehicle front impact event.

In one embodiment, the deflection surface is arranged as an integrated structural part of the rear side edge structure. The deflection surface may be formed in a pressing operation during manufacturing of the front vehicle fender by pressing a curved or creased structure in the rear side edge structure.

In one embodiment, the deflection surface is arranged as a separate structural part attached to the rear side edge structure. The deflection surface may be formed as an elongated separate structure with a rearwards and inwards inclined configuration when attached to the rear side edge structure, for a simple configuration of the deflection surface. The separate structural part used for the deflection surface may be welded, glued, riveted or screwed onto the rear side edge structure for a reliable attachment to the front vehicle fender.

In one embodiment, the rearwards and inwards inclined configuration of the deflection surface is forming a sliding plane enabling an inwards and rearwards sliding movement of the front vehicle fender relative to the vehicle side door in the vehicle front impact event. The sliding plane is in the vehicle front impact event engaging the front edge section of the vehicle side door, and the sliding plane is guiding the front vehicle fender inwards of the vehicle side door upon deformation in the vehicle front impact event. The sliding plane is configured for engaging the front edge section of the vehicle side door to produce a sliding movement of the deflection surface relative to the front edge section of the vehicle side door. This sliding movement is efficiently forcing the front vehicle fender inwards of the vehicle side door in the vehicle front impact event.

In one embodiment, the rearwards and inwards inclined configuration of the deflection surface is forming a structurally reinforced section of the rear side edge structure configured for reducing deformation of the rear side edge structure in the vehicle front impact event. The structurally reinforced section of the rear side edge structure is enabling the displacement of the front vehicle fender inwards of the vehicle side door, preventing the front vehicle fender from blocking opening of the vehicle side door after the vehicle front impact event.

In one embodiment, a lower end of the rear side edge structure comprises a reinforcement member configured for strengthening the deflection surface. The reinforcement member may be arranged as a separate structure that is attached to or arranged in connection to the lower end of the front vehicle fender, and the reinforcement member may be configured as a metal structure or a composite structure. The reinforcement member is used for strengthening the lower end and the deflection surface of the front vehicle fender, for a reliable displacement of the front vehicle fender inwards of the vehicle side door during the vehicle front impact event.

The disclosure further concerns a method for controlling a displacement of a front vehicle fender relative to a sliding vehicle side door in a vehicle front impact event. The front vehicle fender comprises an inner side surface, an outer side surface, and a rear side edge structure. The rear side edge structure is configured for being arranged in a rearwards vehicle direction in direct connection to a front edge section of the vehicle side door in a closed door position. The rear side edge structure comprises a deflection surface having a rearwards and inwards inclined configuration. The method comprises the steps: arranging the vehicle side door in the closed door position, and in a vehicle front impact event when the vehicle side door is arranged in the closed door position engaging the front edge section of the vehicle side door by the deflection surface such that the front vehicle fender is displaced and guided inwards of the vehicle side door, preventing the front vehicle fender from blocking opening of the vehicle side door after the vehicle front impact event.

Advantages with the method are that by displacing and guiding the front vehicle fender inwards of the vehicle side door, the front vehicle fender is prevented from blocking opening of the vehicle side door after the vehicle front impact event. Opening of vehicle side doors after a vehicle impact event is crucial for occupants of the vehicle. In case of certain crash load cases, such as for example in certain full frontal vehicle impact events, the functionality and operability of the doors must be guaranteed so that the occupants can leave the impacted vehicle. The rearwards and inwards inclined configuration of the deflection surface is efficiently producing an inwards and rearwards sliding movement of the front vehicle fender relative to the vehicle side door in the vehicle front impact event. By displacing the front vehicle fender inwards of the vehicle side door, the front vehicle fender is not blocking the opening path of the vehicle side door after the vehicle front impact event. The deflection surface is in this way enabling a safe vehicle construction preventing the front vehicle fender from blocking opening of the vehicle side door after the vehicle front impact event, through the configuration where the deflection surface is engaging the front edge section of the vehicle side door such that the front vehicle fender is displaced and guided inwards of the vehicle side door. With sliding vehicle side door is in this context meant a vehicle side door that is opened and closed in a sliding and/or swiping movement. This is different from traditional hinged door structures where the door structures are connected to the vehicle body structure via hinges and displaced in relation to the vehicle body structure by a swinging or pivoting movement. The sliding vehicle side doors may instead be mounted to or suspended in relation to the vehicle body structure via arms, track systems, or suitable combinations of track and hinge systems. The sliding vehicle side doors are displaced in relation to the vehicle body structure by a sliding and/or a swiping movement horizontally alongside the vehicle body structure.

In one embodiment, the deflection surface comprises a rear section extending in the rearwards vehicle direction, and the front edge section comprises a front edge. The method further comprises the step: arranging the rear section of the deflection surface in the closed door position with an extension rearwards of the front edge of the front edge section for an overlapping configuration of the deflection surface and the front edge section. The overlapping configuration between the deflection surface and the front edge section is enabling an efficient displacement of the front vehicle fender during the vehicle front impact event for an efficient guiding of the front vehicle fender inwards of the vehicle side door. In the vehicle front impact event, excessive forces are deforming the front vehicle fender and causing shockwaves in the structure of the front vehicle fender. If the front vehicle fender is not guided properly during the vehicle impact event, these shockwaves may lead to deformation of the front vehicle fender in unwanted directions, such as on the outside of the vehicle side door. The overlapping relationship between the deflection surface and the front edge section is efficiently preventing that the deformation and the shockwaves are forcing the front vehicle fender on the outside of the vehicle side door during the vehicle front impact event.

In one embodiment, the front edge of the front edge section comprises a door outer panel hem flange. The method further comprises the step: displacing the deflection surface and the outer side surface inwards of the door outer panel hem flange in the vehicle front impact event. In the vehicle front impact event, the deflection surface is engaging the front edge section of the vehicle side door with the door outer panel hem flange, such that the front vehicle fender is efficiently displaced and guided inwards of the vehicle side door. The door outer panel hem flange is forming a forwards pointing structural part of the vehicle side door that is simplifying the interaction between the deflection surface of the front vehicle fender and the front edge section of the vehicle side door.

In one embodiment, the rearwards and inwards inclined configuration of the deflection surface is forming a sliding plane. The method further comprises the step: establishing an inwards and rearwards sliding movement of the front vehicle fender relative to the vehicle side door by the sliding plane in the vehicle front impact event. The sliding plane is in the vehicle front impact event engaging the front edge section of the vehicle side door, and the sliding plane is guiding the front vehicle fender inwards of the vehicle side door upon deformation in the vehicle front impact event. The sliding plane is configured for engaging the front edge section of the vehicle side door to produce a sliding movement of the deflection surface relative to the front edge section of the vehicle side door. This sliding movement is efficiently forcing the front vehicle fender inwards of the vehicle side door in the vehicle front impact event.

In one embodiment, the rearwards and inwards inclined configuration of the deflection surface is forming a structurally reinforced section of the rear side edge structure. The method further comprises the step: reducing deformation of the rear side edge structure by the deflection surface in the vehicle front impact event. The structurally reinforced section of the rear side edge structure is enabling the displacement of the front vehicle fender inwards of the vehicle side door, preventing the front vehicle fender from blocking opening of the vehicle side door after the vehicle front impact event.

In one embodiment, the method further comprises the step: displacing the vehicle side door after the vehicle front impact event in a movement in an outwards vehicle direction and forwards vehicle direction upon opening from the closed door position to an open door position. Depending on the crash situation, this may enable a simple and efficient opening of the vehicle side door after the vehicle front impact event. The opening of the vehicle side door after the vehicle front impact event may allow occupants of the vehicle to safely leave the vehicle after the vehicle front impact event. The movement of the vehicle side door in the outwards vehicle direction and forwards vehicle direction upon opening is positioning the vehicle side door in a direction outwards of the front vehicle fender, and the front vehicle fender is in this way being positioned at least partly behind and inwards of the vehicle side door in the open door positions. It is especially important for vehicles having vehicle side doors that are opened with a sliding and/or swiping movement in the outwards vehicle direction and forwards vehicle direction that the front vehicle fender is displaced and guided inwards of the vehicle side door in the vehicle impact event, since otherwise the vehicle side doors may be impossible to open after the vehicle impact event due to blocking by a deformed front vehicle fender. The displacing and guiding of the front vehicle fender inwards of the vehicle side door in the vehicle impact event is efficiently preventing the front vehicle fender from blocking opening of the vehicle side door after the vehicle front impact event, enabling opening of the vehicle side door in the movement in the outwards vehicle direction and forwards vehicle direction after the vehicle impact event.

### BRIEF DESCRIPTION OF DRAWINGS

The disclosure will be described in detail in the following, with reference to the attached drawings, in which
- Fig. 1a-b: show schematically, in side views, a vehicle having a front vehicle fender and a sliding vehicle side door, where the vehicle side door is arranged in a closed door position and in an open door position,
- Fig. 2a-c: show schematically, in views from above, the vehicle side door arranged in the closed door position and open door positions, and positioning of the vehicle side door relative to the front vehicle fender in the closed door position and open door positions,
- Fig. 3a-b: show schematically, in perspective cross-sectional views from above, sections of the front vehicle fender and the vehicle side door, where the front vehicle fender comprises a deflection surface and the vehicle side door comprises a front edge section, and
- Fig. 4a-c: show schematically, in perspective cross-sectional views from above, sections of the front vehicle fender and the vehicle side door in sequences of a vehicle front impact event, where the deflection surface is engaging the front edge section of the vehicle side door in the vehicle front impact event such that the front vehicle fender is displaced and guided inwards of the vehicle side door.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments but are applicable on other variations of the disclosure.

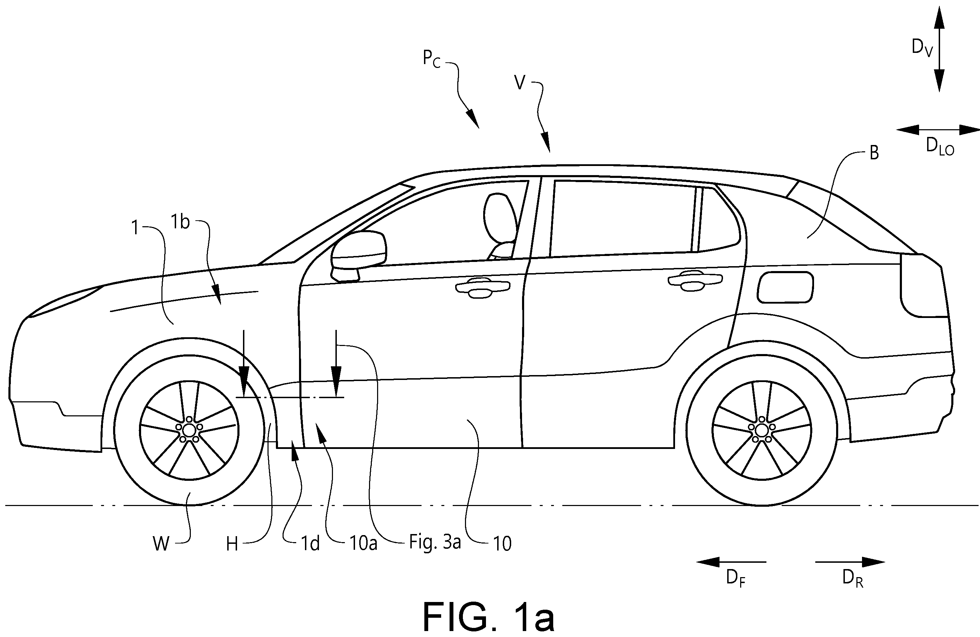

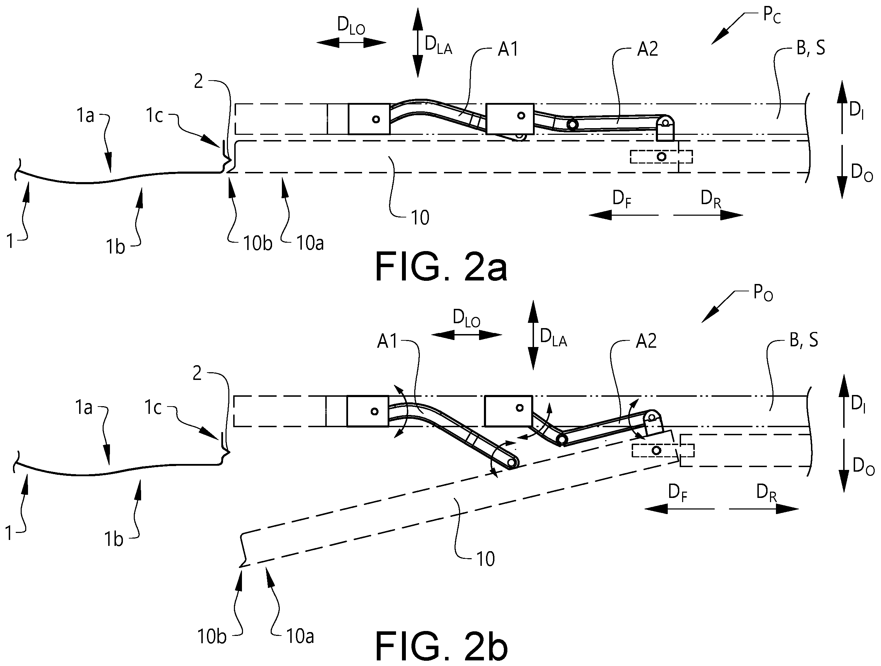

Figures 1a-b schematically show an embodiment of a vehicle V, where the vehicle V comprises vehicle side doors movably arranged relative to a vehicle body structure B of the vehicle V. The vehicle V further comprises a front vehicle fender 1, and the front fender 1 is arranged in direct connection to a sliding vehicle side door 10, as understood from the figures. The sliding vehicle side door 10 is in the shown embodiment arranged as a front door of the vehicle V, and in figures 2a-c the vehicle side door 10 is schematically shown in different positions relative to the vehicle body structure B in views from above.

With sliding vehicle side door 10 is in this context meant a vehicle side door that is opened and closed relative to the vehicle body structure B in a sliding and/or swiping movement, as will be exemplified below. This is different from traditional hinged door structures where the door structures are connected to a vehicle body structure via hinges and displaced in relation to the vehicle body structure by a swinging or pivoting movement. The sliding vehicle side door 10 may instead be mounted to or suspended in relation to the vehicle body structure via arms, track systems, or suitable combinations of track and hinge systems. The sliding vehicle side door 10 is displaced in relation to the vehicle body structure B by a sliding and/or a swiping movement horizontally alongside the vehicle body structure B.

The vehicle V has an extension in a longitudinal direction D_{LO}, a vertical direction D_{V}, and a lateral direction D_{LA}. In the following, with the expressions front or forwards are meant positions, directions, or movements, in a forwards longitudinal direction D_{LO} of the vehicle V; with the expressions rear or rearwards are meant positions, directions, or movements, in a rearwards longitudinal direction D_{LO} of the vehicle V; with the expressions outer or outwards are meant positions, directions, or movements, in an outwards lateral direction D_{LA} of the vehicle V; with the expressions inner or inwards are meant positions, directions, or movements, in an inwards lateral direction D_{LA} of the vehicle V; with the expressions upper or upwards are meant positions, directions, or movements, in an upwards vertical direction D_{V} of the vehicle V; and with the expressions lower or downwards are meant positions, directions, or movements, in a downwards vertical direction D_{V} of the vehicle V.

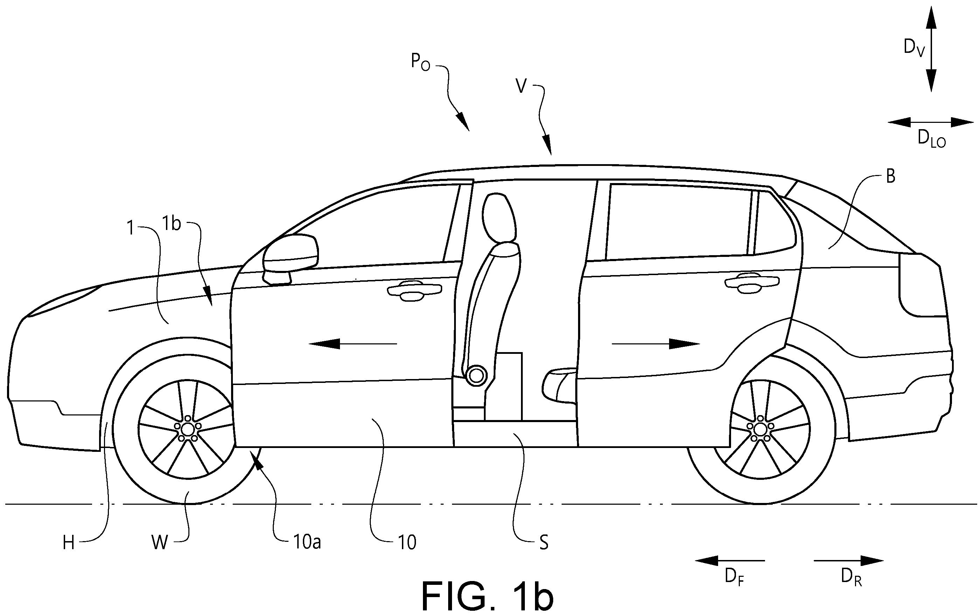

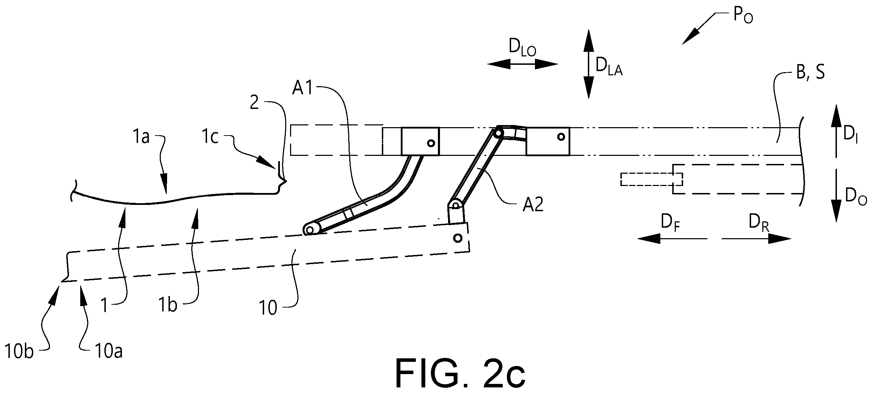

In figures 1a and 2a, the vehicle side door 10 is arranged in a closed door position P_{C}, and in figures 1 b and 2b-c, the vehicle side door 10 is arranged in open door positions P_{O}. The vehicle side door 10 is movably arranged relative to the vehicle body structure B between the closed door position P_{C} and open door positions P_{O}. Any position in which the vehicle side door 10 has been displaced away from the closed door position P_{C} may be considered an open door position P_{O}, such as a partly open door position, as shown in figures 1b and 2b, or a fully open door position, as exemplified in figure 2c. In the illustrated embodiment, the vehicle side door 10 is arranged as a sliding vehicle side door.

The vehicle side door 10 of the shown embodiment is when displaced from the closed door position P_{C} to an open door position P_{O}, as indicated with the arrow in figure 1b and sequentially illustrated in figures 2a-c, moved in an outwards vehicle direction D_{O} and forwards vehicle direction D_{F}. Such an opening of the vehicle side door 10 is causing the vehicle side door 10 to move in an opening sequence relative to the vehicle body structure B, where the opening path of the vehicle side door 10 is displacing the vehicle side door 10 in the outwards vehicle direction D_{O} and forwards vehicle direction D_{F}. In this way, the vehicle side door 10 is said to be slidingly and/or swipingly displaced relative to the vehicle body structure B. The vehicle side door 10 is thus opened through a combined movement outwards in the lateral direction D_{LA} and forwards in the longitudinal direction D_{LO} of the vehicle V relative to the vehicle body structure B. In the open door position P_{O}, the vehicle side door 10 is positioned at least partly outside of the front vehicle fender 1, through the sliding and/or swiping movement, as understood from figures 1b and 2c. When closing the vehicle side door 10 from an open position P_{O} to the closed position P_{C}, the vehicle side door 10 is instead moved in a rearwards vehicle direction D_{R} and inwards vehicle direction D_{I} through a sliding and/or swiping movement. The vehicle side door 10 is in this way closed through a combined movement rearwards in the longitudinal direction D_{LO} and inwards in the lateral direction D_{LA} of the vehicle V relative to the vehicle body structure B.

In the shown embodiment, the vehicle side door 10 is arranged as a front door structure in direct connection to a rear door structure and the vehicle V could in this way be arranged with a large door opening having no supporting B-pillar, as understood from figure 1b. The vehicle side door 10 may be connected to the vehicle body structure B via suitable arms or other opening arrangements that enable efficient sliding and/or swiping opening and closing of the vehicle side door 10.

In the exemplified embodiment shown in figures 2a-c, the vehicle side door 10 is connected to the vehicle body structure B via a first arm A1 and a second arm A2. The first arm A1 and the second arm A2 are arranged at a lower end of the vehicle side door 10. The first arm A1 and the second arm A2 are pivoted relative to the vehicle side door 10 and the vehicle body structure B upon displacement of the vehicle side door 10 between the closed door position P_{C} and the open door positions P_{O}. The movable first arm A1 and second arm A2 are providing an efficient opening and closing of the vehicle side door 10. Suitably, the first arm A1 and the second arm A2 are pivotably connected to a side sill structure S forming part of the vehicle body structure B. It should be understood that further non-illustrated arms or arrangements may be used for controlling the movement of the vehicle side door 10 relative to the vehicle body structure B, such as for example an upper arm.

In other non-illustrated embodiments, the vehicle side door 10 may instead when displaced from the closed door position P_{C} to an open door position P_{O}, be moved in an outwards vehicle direction D_{O} and rearwards vehicle direction D_{R} through a sliding and/or swiping movement. The vehicle side door 10 is in this way displaced through a combined movement outwards in the lateral direction D_{LA} and rearwards in the longitudinal direction D_{LO} of the vehicle V relative to the vehicle body structure B.

The front vehicle fender 1 may be of any suitable design and configuration for housing a wheel W of the vehicle V and framing a wheel housing H. The front vehicle fender 1 is not only shielding the wheel W and the surrounding area of the vehicle V from debris and water but may also in a vehicle impact event absorb some impact forces.

The front vehicle fender 1 comprises an inner side surface 1a, an outer side surface 1b, and a rear side edge structure 1c, as shown in for example figures 1a-b and 2a-c. The inner side surface 1a is an inwards oriented surface of the front vehicle fender 1 when attached to the vehicle V. The outer side surface 1b is an outwards oriented surface of the front vehicle fender 1 when attached to the vehicle V, and the outer side surface 1b is fully or partly visible from the exterior of the vehicle V. The rear side edge structure 1c is a rearwards oriented structural part of the front vehicle fender 1 when attached to the vehicle V, and the rear side edge structure 1c is suitably used for attaching the front vehicle fender 1 to the vehicle V and for forming a barrier between the wheel housing H of the vehicle V and the door opening section of the vehicle V. The vehicle side door 10 is positioned in the longitudinal direction D_{LO} in direct connection to the rear side edge structure 1c of the front vehicle fender 1, as understood from the figures. The front vehicle fender 1 is suitably made from a pressed sheet of steel or other suitable material, such as aluminium or composite materials. The front vehicle fender 1 may be manufactured in one single structural piece or alternatively assembled from two or more structural parts.

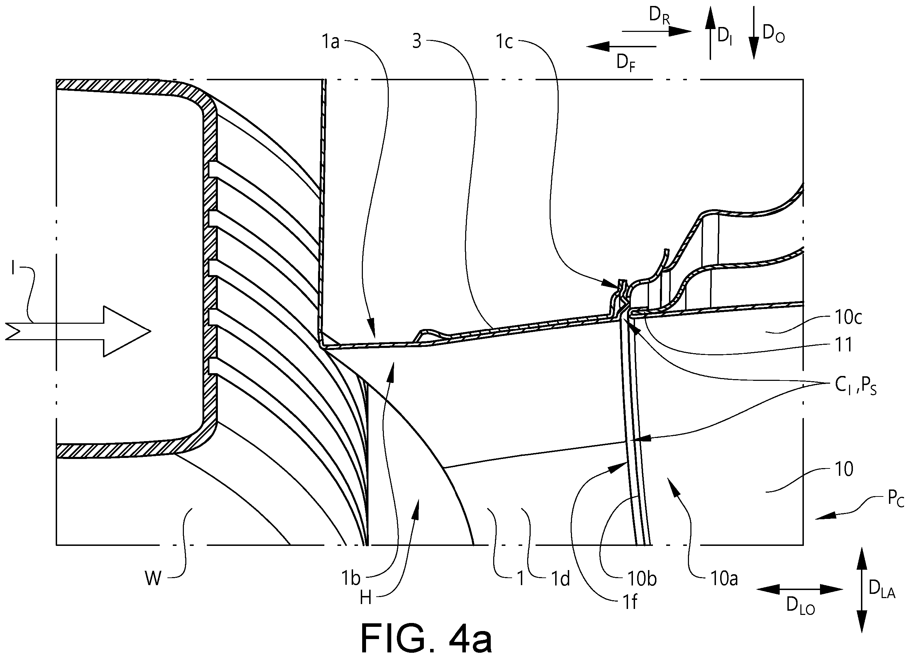

With a vehicle impact event is meant any impact situation where the vehicle V is exposed to impact forces, such as when the vehicle V is hitting an object or an object or another vehicle is hitting the vehicle V. Typical vehicle impact events are when the vehicle V is involved in a crash situation or collision, for example with another vehicle, or if the vehicle V leaves a roadway in a run-off-road collision or similar event. If the vehicle V is involved in a collision, impact forces I will act on the front vehicle fender 1, as shown in figures 4a-c. In a vehicle front impact event, the vehicle V is involved in a head-on collision with an object or another vehicle. In the vehicle front impact event, the vehicle V may be involved in a collision where the front end or front section of the vehicle V runs into an object or another vehicle, or where an object or another vehicle runs into the vehicle V. In a vehicle front impact event, the front vehicle fender 1 is deformed and pushed or forced rearwards towards the vehicle side door 10. The vehicle front impact event may for example be a full width frontal collision or an offset frontal collision.

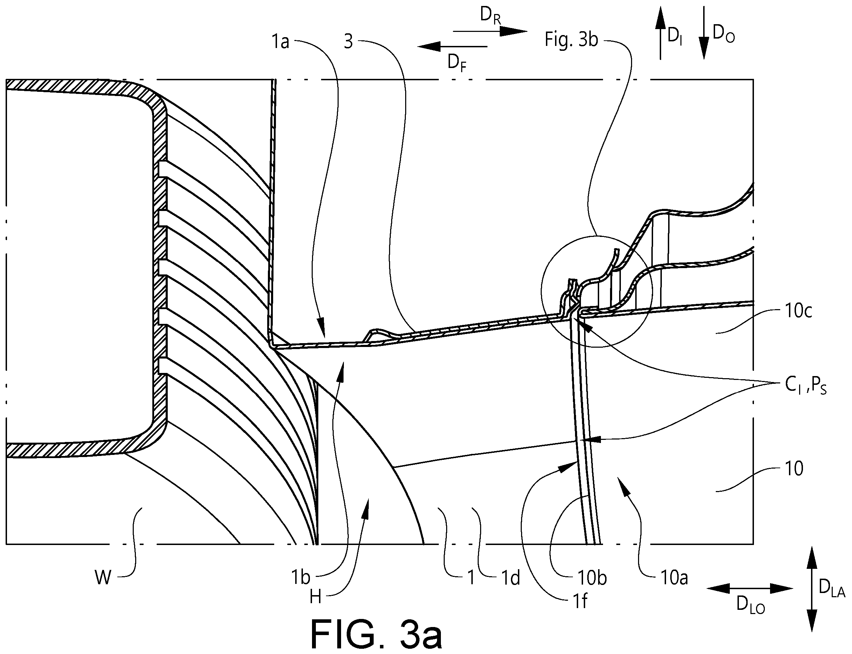

When attached to the vehicle V, the rear side edge structure 1c of the front vehicle fender 1 is arranged in a rearwards vehicle direction D_{R}, as shown in for example figures 2a and 3a-b. When the vehicle side door 10 is in the closed door position P_{C}, the rear side edge structure 1c of the front vehicle fender 1 is arranged in direct connection to a front edge section 10a with a front edge 10b of the vehicle side door 10.

The rear side edge structure 1c of the front vehicle fender 1 comprises a deflection surface 2. The deflection surface 2 is in the shown embodiment a rearwards protruding structural part of the rear side edge structure 1c that is designed for engaging the front edge section 10a of the vehicle side door 10 in a vehicle front impact event, when the vehicle side door is arranged in the closed door position P_{C}. The deflection surface 2 is displacing and guiding the front vehicle fender 1 inwards of the vehicle side door 10 during the vehicle front impact event, and the guiding of the front vehicle fender 1 inwards of the vehicle side door 10 is preventing the front vehicle fender 1 from blocking opening of the vehicle side door 10 after the vehicle front impact event.

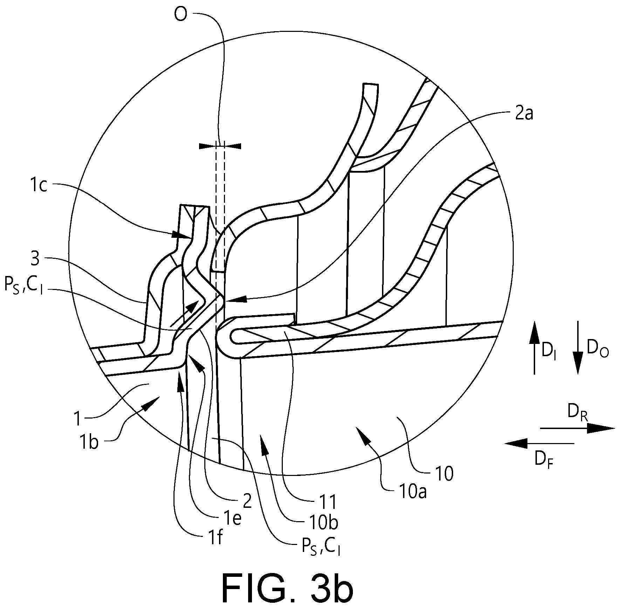

As shown in figures 3a-b, the deflection surface 2 of the rear side edge structure 1c has a rearwards and inwards inclined configuration C_{I}. In the shown embodiment, the deflection surface 2 comprises a rear section 2a, and the front edge section 10a of the vehicle side door 10 comprises the front edge 10b. The rear section 2a of the deflection surface 2 is extending in the rearwards vehicle direction D_{R} such that in the closed door position P_{C}, the rear section 2a of the deflection surface 2 is extending rearwards of the front edge 10b of the front edge section 10a, as best illustrated in figure 3b. This configuration of the rear section 2a of the deflection surface 2 and the front edge 10b of the front edge section 10a is establishing an overlapping configuration O of the deflection surface 2 and the front edge section 10a in the longitudinal vehicle direction D_{LO}. The overlapping configuration O is enabling an efficient displacement of the front vehicle fender 1 during the vehicle front impact event for an efficient guiding and forcing of the front vehicle fender 1 inwards of the vehicle side door 10. In the vehicle front impact event, excessive forces are deforming the front vehicle fender 1 and causing shockwaves in the structure of the front vehicle fender 1. The relationship between the deflection surface 2 and the front edge section 10a with the overlapping configuration O is preventing that the shockwaves are forcing the front vehicle fender 1 on the outside of the vehicle side door 10 during the vehicle front impact event.

In embodiments, the vehicle side door 10 comprises an outer panel structure 10c, which is attached to the front edge section 10a at the front edge 10b via a door outer panel hem flange 11, as shown in for example figures 3a-b. In the vehicle front impact event, the deflection surface 2 and the outer side surface 1b are configured for being displaced inwards of the door outer panel hem flange 11 of the front edge 10b.

The rearwards and inwards inclined configuration C_{I} of the deflection surface 2 is forming a sliding plane P_{S}. The sliding plane P_{S} is enabling the establishment of an inwards and rearwards sliding movement of the front vehicle fender 1 relative to the vehicle side door 10 in the vehicle front impact event. In figure 3b, the rearwards and inwards inclined configuration C_{I} of the deflection surface 2 is indicated with an arrow to illustrate the sliding plane P_{S}. The sliding plane P_{S} is in the vehicle front impact event engaging the front edge section 10a of the vehicle side door 10, and the sliding plane P_{S} is guiding the front vehicle fender 1 inwards of the vehicle side door 10 upon deformation in the vehicle front impact event.

The deflection surface 2 may be arranged as an integrated structural part of the rear side edge structure 1c, as shown in the figures. In the shown embodiment, the deflection surface 2 is suitably formed in the pressing operation during manufacturing of the front vehicle fender 1 by pressing a curved or creased structure in the rear side edge structure 1c. The curved or creased structure constituting the deflection surface 2 is extending rearwards from a base surface 1e of the rear side edge structure 1c, as understood from figure 3b. The base surface 1e is in the shown embodiment, a surface of the rear side edge structure 1c arranged in connection to a rear edge 1f of the front vehicle fender, which rear edge 1f is arranged between the outer side surface 1b and the base surface 1e of the rear side edge structure 1c. The deflection surface 2 is suitably extending in the vertical direction D_{V} along a major part of the rear side edge structure 1c, from a lower end 1d of the rear side edge structure 1c to an upper end of the rear side edge structure 1c. Depending on the configurations of the front vehicle fender 1 and the vehicle side door 10, the design of the deflection surface 2 may vary. In non-illustrated alternative embodiments, the deflection surface 2 may be a surface structure that is combined of two or more rearwards protruding parts of the rear side edge structure 1c that are separated from each other in the vertical direction Dv.

The rearwards and inwards inclined configuration C_{I} of the deflection surface 2 is through the curved or creased configuration forming a structurally reinforced section of the rear side edge structure 1c that is reducing deformation of the rear side edge structure 1c in the vehicle front impact event. This is enabling the displacement of the front vehicle fender 1 inwards of the vehicle side door 10, preventing the front vehicle fender 1 from blocking opening of the vehicle side door 10 after the vehicle front impact event.

In alternative non-illustrated embodiments, the deflection surface 2 may instead be arranged as a separate structural part attached to the rear side edge structure 1c. The deflection surface 2 may for example be formed as an elongated separate structure with a rearwards and inwards inclined configuration when attached to the rear side edge structure 1c, for a simple configuration of the deflection surface 2. The separate structural part used for the deflection surface may be welded, glued, riveted or screwed onto the rear side edge structure 1c for an efficient and reliable attachment to the front vehicle fender 1.

To further increase the rigidity and strength of the rear side edge structure 1c, the lower end 1d of the rear side edge structure 1c may comprise a reinforcement member 3. The reinforcement member 3 is suitably arranged as a separate structure that is attached to or arranged in connection to the lower end 1d of the front vehicle fender 1, and the reinforcement member 3 may be configured as a metal structure or a composite structure. The reinforcement member 3 is configured for strengthening the lower end 1d and the deflection surface 2, for an efficient displacement of the front vehicle fender 1 inwards of the vehicle side door 10 during the vehicle front impact event, preventing the front vehicle fender 1 from blocking opening of the vehicle side door 10 after the vehicle front impact event.

During the vehicle front impact event when the vehicle side door is arranged in the closed door position P_{C}, the front edge section 10a of the vehicle side door 10 is engaged by the deflection surface 2 for a controlled displacement of the front vehicle fender 1 relative to the vehicle side door 10. The deflection surface 2 is displacing and guiding the front vehicle fender 1 inwards of the vehicle side door 10. In this way, the front vehicle fender 1 is prevented from blocking opening of the vehicle side door 10 after the vehicle front impact event, as will be further described below in connection to figure 4a-c.

In figures 4a-c, sections of the front vehicle fender 1 and the vehicle side door 10 are schematically illustrated in sequences of a vehicle front impact event. As understood from the figures, the vehicle side door 10 is arranged in the closed door position P_{C}. During the vehicle front impact event, impact forces I that originate from the vehicle front impact event is deforming the front vehicle fender 1 and pushing the front vehicle fender 1 in a rearwards direction D_{R} towards the vehicle side door 10, as indicated with the arrow in the figures.

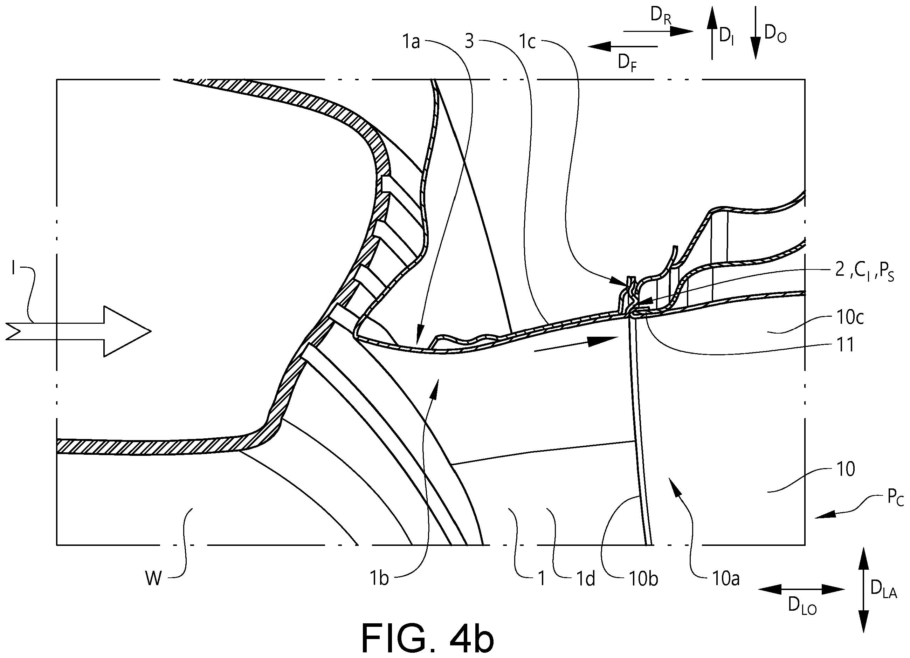

Figure 4a is illustrating an initial impact situation during the vehicle front impact event, where the vehicle front impact event is initiated. At this early initial stage, no deformations of the front vehicle fender 1 is yet occurring. Impact forces I are in this stage built up in the vehicle front impact event, and the impact forces I will lead to deformation of the front vehicle fender 1, as will be shown in figures 4b-c.

In figure 4b, the vehicle front impact event is shown at a later stage compared to the initial impact situation shown in figure 4a. In figure 4b, a deformation of the vehicle front has been initiated by the impact forces I acting on the vehicle V, and typically during deformation of the front vehicle fender 1, the wheel W is pushed rearwards towards the front vehicle fender 1 and the rear side edge structure 1c of the front vehicle fender 1 is pushed towards the front edge section 10a of the vehicle side door 10, as indicated with an arrow. The deflection surface 2 is engaging the front edge section 10a of the vehicle side door 10 in the vehicle front impact event such that the front vehicle fender 1 is displaced and guided inwards of the vehicle side door 10. From figure 4b, it is understood that the deflection surface 2 is starting to move inwards of the front edge 10b of the vehicle side door 10. The overlapping configuration O of the deflection surface 2 and the front edge section 10a, where the rear section 2a of the deflection surface 2 in the closed door position P_{C} is extending rearwards of the front edge 10b of the front edge section 10a, is forcing the deflection surface 2 inwards of the door outer panel hem flange 11 during the vehicle front impact event. Thus, in figure 4b, the deflection surface 2 and the outer side surface 1b of the vehicle front fender 1 are forced to be displaced inwards of the door outer panel hem flange 11.

From the position illustrated in figure 4b, the rearwards and inwards inclined configuration C_{I} of the deflection surface 2 forming the sliding plane P_{S} is efficiently enabling a following inwards and rearwards sliding movement of the front vehicle fender 1 relative to the vehicle side door 10 during the vehicle front impact event.

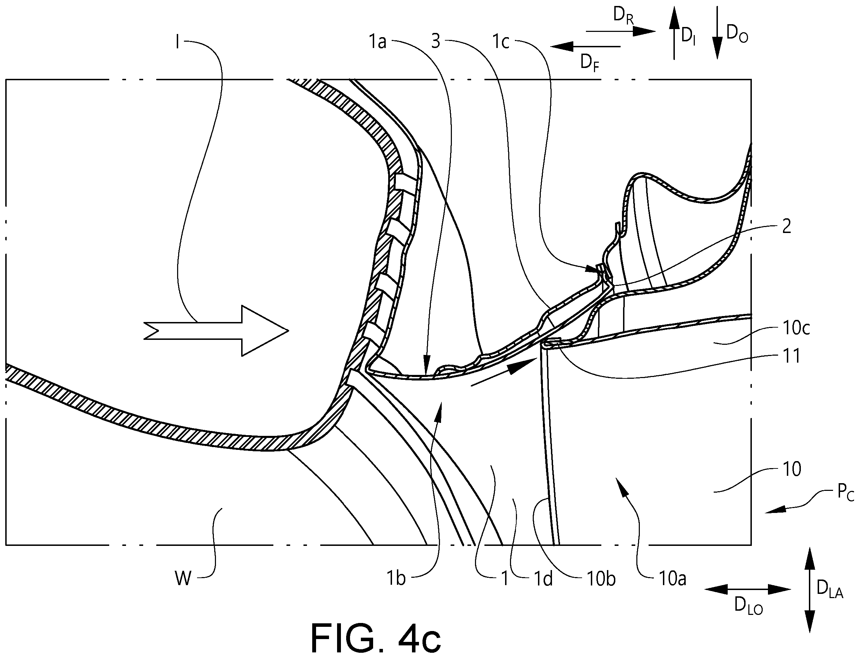

In figure 4c, the vehicle front impact event is shown at an even later stage compared to the impact situation shown in figure 4b. The impact event I shown in figure 4c may for example be an exemplified final deformation stage of the vehicle front impact event. In figure 4c, the deformation of the vehicle front section has been progressed further by the impact forces I acting on the vehicle V. In this impact situation, the wheel W is pushed further rearwards towards the front vehicle fender 1 and the rear side edge structure 1c of the front vehicle fender 1 is pushed rearwards beyond the front edge section 10a of the vehicle side door 10, as indicated with an arrow. The deflection surface 2 has engaged the front edge section 10a of the vehicle side door 10 in the vehicle front impact event such that the front vehicle fender 1 is displaced and guided further inwards of the vehicle side door 10. From figure 4c, it is understood that the deflection surface 2 is clearly displaced rearwards and inwards of the front edge 10b and the front edge section 10a of the vehicle side door 10. The overlapping configuration O of the deflection surface 2 and the front edge section 10a, where the rear section 2a of the deflection surface 2 in the closed door position P_{C} is extending rearwards of the front edge 10b of the front edge section 10a, has forced the rear side edge structure 1c with the deflection surface 2 inwards of front edge section 10a of the front vehicle fender 1 during the vehicle front impact event. The rear side edge structure 1c with the deflection surface 2 and the outer side surface 1b of the vehicle front fender 1 are in this way forced to be displaced inwards of the vehicle side door 10.

As understood from figure 4c, the rearwards and inwards inclined configuration C_{I} of the deflection surface 2 forming the sliding plane P_{S} has efficiently produced the inwards and rearwards sliding movement of the front vehicle fender 1 relative to the vehicle side door 10 in the vehicle front impact event. The sliding plane P_{S} is thus enabling the inwards and rearwards sliding movement of the front vehicle fender 1 relative to the vehicle side door 10. Further, the rearwards and inwards inclined configuration C_{I} of the deflection surface 2 is as described above forming a structurally reinforced section of the rear side edge structure 1c, which is efficiently reducing deformation of the rear side edge structure 1c during the vehicle front impact event. The reinforcement member 3 arranged at the lower end 1d of the rear side edge structure 1c is even further strengthening the deflection surface 2 for an efficient displacement of the front vehicle fender 1 inwards of the vehicle side door 10.

As described above in connection to figures 4a-c, the rearwards and inwards inclined configuration C_{I} of the deflection surface 2 is enabling the deflection surface 2 to engage the front edge section 10a of the vehicle side door 10 such that the front vehicle fender 1 is displaced and guided inwards of the vehicle side door 10 during the vehicle front impact event. The displacement of the vehicle fender 1 inwards of the vehicle side door 10 during the vehicle front impact event is efficiently preventing the front vehicle fender 1 from blocking opening of the vehicle side door 10 after the vehicle front impact event. In the position shown in figure 4c, the vehicle side door 10 is possible to open from the closed door position P_{C} to an open door position P_{O} by a movement in an outwards vehicle direction D_{O} and forwards vehicle direction D_{F}, or depending on the construction of the vehicle side door 10 alternatively by a movement in an outwards vehicle direction D_{O} and rearwards vehicle direction D_{R}.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the appended claims. Reference signs mentioned in the claims should not be seen as limiting the extent of the matter protected by the claims, and their sole function is to make claims easier to understand.

### REFERENCE SIGNS

- 1:: Front vehicle fender
- 1a:: Inner side surface
- 1b:: Outer side surface
- 1c:: Rear side edge structure
- 1d:: Lower end
- 1e:: Base surface
- 1f:: Rear edge
- 2:: Deflection surface
- 2a:: Rear section
- 3:: Reinforcement member
- 10:: Vehicle side door
- 10a:: Front edge section
- 10b:: Front edge
- 10c:: Outer panel structure
- 11:: Door outer panel hem flange

- A1:: First arm
- A2:: Second arm
- B:: Vehicle body structure
- C_{I}:: Inclined configuration
- D_{F}:: Forwards vehicle direction
- D_{I}:: Inwards vehicle direction
- D_{LA}:: Lateral direction
- D_{LO}:: Longitudinal direction
- D_{O}:: Outwards vehicle direction
- D_{R}:: Rearwards vehicle direction
- D_{V}:: Vertical direction
- H:: Wheel housing
- I:: Impact force
- O:: Overlapping configuration
- P_{C}:: Closed door position
- P_{O}:: Open door position
- P_{S}:: Sliding plane
- S:: Side sill structure
- V:: Vehicle
- W:: Wheel

## Claims

1. A vehicle (V) comprising a front vehicle fender (1) and a sliding vehicle side door (10), wherein the front vehicle fender comprises an inner side surface (1a), an outer side surface (1b), and a rear side edge structure (1c),
wherein the rear side edge structure (1c) is arranged in a rearwards vehicle direction (D_{R}) in direct connection to a front edge section (10a) of the vehicle side door (10) in a closed door position (P_{C}),
wherein the rear side edge structure (1c) comprises a deflection surface (2) having a rearwards and inwards inclined configuration (C_{I}),
wherein in the closed door position (P_{C}) the deflection surface (2) is configured for engaging the front edge section (10a) of the vehicle side door (10) in a vehicle front impact event such that the front vehicle fender (1) is displaced and guided inwards of the vehicle side door (10), preventing the front vehicle fender (1) from blocking opening of the vehicle side door (10) after the vehicle front impact event.

2. The vehicle (V) according to claim 1,
wherein the vehicle side door (10) is configured for being displaced in a movement in an outwards vehicle direction (D_{O}) and forwards vehicle direction (D_{F}) upon opening from the closed door position (P_{C}) to an open door position (Po).

3. The vehicle (V) according to claim 1 or 2,
wherein the deflection surface (2) comprises a rear section (2a) extending in the rearwards vehicle direction (D_{R}) such that in the closed door position (P_{C}) the rear section (2a) of the deflection surface (2) is extending rearwards of a front edge (10b) of the front edge section (10a) for an overlapping configuration (O) of the deflection surface (2) and the front edge section (10a).

4. The vehicle (V) according to claim 3,
wherein the front edge (10b) of the front edge section (10a) comprises a door outer panel hem flange (11), wherein the deflection surface (2) and the outer side surface (1b) are configured for being displaced inwards of the door outer panel hem flange (11) in the vehicle front impact event.

5. The vehicle (V) according to any preceding claim,
wherein the deflection surface (2) is arranged as an integrated structural part of the rear side edge structure (1c).

6. The vehicle (V) according to any preceding claim,
wherein the deflection surface (2) is arranged as a separate structural part attached to the rear side edge structure (1c).

7. The vehicle (V) according to any preceding claim,
wherein the rearwards and inwards inclined configuration (C_{I}) of the deflection surface (2) is forming a sliding plane (P_{S}) enabling an inwards and rearwards sliding movement of the front vehicle fender (1) relative to the vehicle side door (10) in the vehicle front impact event.

8. The vehicle (V) according to any preceding claim,
wherein the rearwards and inwards inclined configuration (C_{I}) of the deflection surface (2) is forming a structurally reinforced section of the rear side edge structure (1c) configured for reducing deformation of the rear side edge structure (1c) in the vehicle front impact event.

9. The vehicle (V) according to any preceding claim,
wherein a lower end (1d) of the rear side edge structure (1c) comprises a reinforcement member (3) configured for strengthening the deflection surface (2).

10. A method for controlling a displacement of a front vehicle fender (1) relative to a sliding vehicle side door (10) in a vehicle front impact event, wherein the front vehicle fender comprises an inner side surface (1a), an outer side surface (1b), and a rear side edge structure (1c),
wherein the rear side edge structure (1c) is configured for being arranged in a rearwards vehicle direction (D_{R}) in direct connection to a front edge section (10a) of the vehicle side door (10) in a closed door position (P_{C}),
wherein the rear side edge structure (1c) comprises a deflection surface (2) having a rearwards and inwards inclined configuration (C_{I}), wherein the method comprises the steps:
arranging the vehicle side door (10) in the closed door position (P_{C}), and in a vehicle front impact event when the vehicle side door is arranged in the closed door position (P_{C}) engaging the front edge section (10a) of the vehicle side door (10) by the deflection surface (2) such that the front vehicle fender (1) is displaced and guided inwards of the vehicle side door (10), preventing the front vehicle fender (1) from blocking opening of the vehicle side door (10) after the vehicle front impact event.

11. The method according to claim 10,
wherein the deflection surface (2) comprises a rear section (2a) extending in the rearwards vehicle direction (D_{R}) and wherein the front edge section (10a) comprises a front edge (10b), wherein the method further comprises the step: arranging the rear section (2a) of the deflection surface (2) in the closed door position (P_{C}) with an extension rearwards of the front edge (10b) of the front edge section (10a) for an overlapping configuration (O) of the deflection surface (2) and the front edge section (10a).

12. The method according to claim 10 or 11,
wherein the front edge (10b) of the front edge section (10a) comprises a door outer panel hem flange (11), wherein the method further comprises the step: displacing the deflection surface (2) and the outer side surface (1b) inwards of the door outer panel hem flange (11) in the vehicle front impact event.

13. The method according to any of claims 10 to 12,
wherein the rearwards and inwards inclined configuration (C_{I}) of the deflection surface (2) is forming a sliding plane (Ps), wherein the method further comprises the step: establishing an inwards and rearwards sliding movement of the front vehicle fender (1) relative to the vehicle side door (10) by the sliding plane (P_{S}) in the vehicle front impact event.

14. The method according to any of claims 10 to 13,
wherein the rearwards and inwards inclined configuration (C_{I}) of the deflection surface (2) is forming a structurally reinforced section of the rear side edge structure (1c), wherein the method further comprises the step: reducing deformation of the rear side edge structure (1c) by the deflection surface (2) in the vehicle front impact event.

15. The method according to any of claims 10 to 14,
wherein the method further comprises the step: displacing the vehicle side door (10) after the vehicle front impact event in a movement in an outwards vehicle direction (D_{O}) and forwards vehicle direction (D_{F}) upon opening from the closed door position (P_{C}) to an open door position (P_{O}).
